# EUROPEAN PATENT SPECIFICATION

(11) **EP 1 223 544 B1**
(45) Date of publication and mention of the grant of the patent: **30.03.2005**
(21) Application number: 02000158.2
(22) Date of filing: 08.01.2002
(51) Int. Cl.: G06K 15/00

(54) **Image printing method and apparatus**
Bilddruckverfahren und -vorrichtung
Procédé et dispositif d'impression d'image

(30) Priority: 11.01.2001 JP 2001003828
(43) Date of publication of application: 17.07.2002
(73) Proprietor: SEIKO EPSON CORPORATION, Shinjuku-ku, Tokyo 163-0811 (JP)
(72) Inventor: Hayama, Hitoshi, Suwa-shi, Nagano-ken 392-8502 (JP)
(74) Representative: Hoffmann, Eckart, Dipl.-Ing.

(56) References cited:
- US-A- 5 867 634
- PATENT ABSTRACTS OF JAPAN vol. 007, no. 164 (P-211), 19 July 1983 (1983-07-19) & JP 58 072239 A (MITSUBISHI JUKOGYO KK), 30 April 1983 (1983-04-30)

## Description

### BACKGROUND OF THE INVENTION

### Field of the Invention

This invention relates to an image printing method, an image printing apparatus and an image printing system, which are capable of printing a plurality of copies of a desired print image, as well as a label producing method and a label producing system, which are capable of producing labels having the print image printed thereon.

### Prior Art

When N copies of a print image (N is an integer equal to or larger than 2) are printed, generally, the print image is printed based on print image data representing the print image, and the same printing operation is repeatedly carried out N times. Alternatively, unless the capacity of memory is strictly limited, after integrated print image data having N copies of the print image data arranged side by side is prepared, the N copies of the desired print image can be printed at a time based on the integrated print image data.

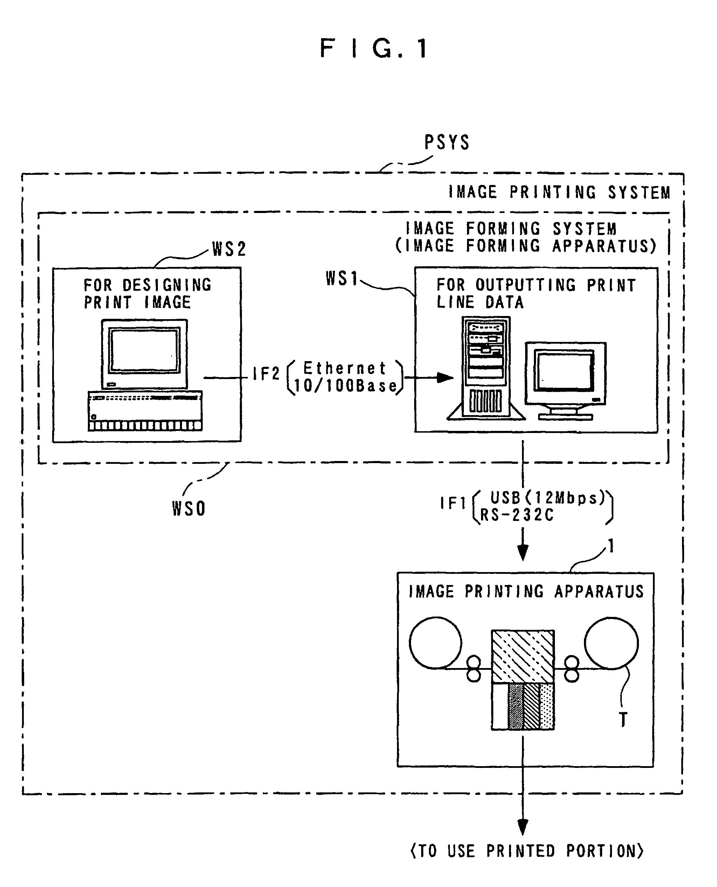

Now, there is a case in which print image data representing a desired print image is formed by an image forming apparatus, such as a personal computer or a work station, which is excellent in capability of processing and editing print images, such as contour lines, and then the formed print image data is sent to a high-speed, high-(print)quality image printing apparatus to print the desired print image based on the received print image data (see FIG. 1). In the case of such an image printing system, convenience in forming print image data is ensured by the image forming apparatus, such as a personal computer, while high-speed and high-quality printing is ensured by the image printing apparatus.

However, in the conventional image printing apparatus for use with the image printing system of the above-mentioned kind, it is impossible to print a plurality of copies of a print image until print image data representing the print image is received. Hence, even if the image forming apparatus and the image printing apparatus are high in performance, if print image data is transferred (communicated) at a low speed from the image forming apparatus to the image printing apparatus, the limited communication speed makes it difficult to attain high-speed printing. For instance, when N copies of a print image, where N is an integer equal to or larger than 2, each formed by J dots by K dots, where J is an integer equal to or larger than 2 and K is an integer equal to or larger than 2, are printed, if print image data representing the print image is communicated in units of line data items each representing one line of the print image data, and K line data items corresponding to K lines are sequentially transmitted, the N copies of the print image cannot be printed until all the K line data items have been received. Such adverse effects of the communication speed on the printing speed are particularly marked when print image data to be communicated or transmitted is large-sized (large in volume) that is, when the amount of information (information for designating gradation values or the like) with respect to one dot is large as in the case of color images being transferred or when the size (number of dots) of a print image is large, for instance.

### SUMMARY OF THE INVENTION

It is an object of the invention to provide an image printing method, an image printing apparatus and an image printing system, which are capable of communicating print image data representing a desired print image in units of line data items each representing one line of the print image data, and at the same time printing a plurality of copies of the print image at a high speed.

This object is acieved by a method as claimed in claim 1 and an image printing apparatus as claimed in claim 23. Preferred embodiments and uses of the invention are subject-matter of the dependent claims.

The above and other objects, features, and advantages of the invention will become more apparent from the following detailed description taken in conjunction with the accompanying drawings.

### BRIEF DESCRIPTION OF THE DRAWINGS

FIG. 1 is an explanatory view schematically showing the arrangement of an image printing system to which are applied an image printing method, an image printing apparatus, an image printing system, a label producing method, and a label producing system according to an embodiment of the invention;
FIG. 2 is a schematic cross-sectional view of a mechanical system of the FIG. 1 image printing apparatus, as viewed from a side thereof;
FIG. 3 is a schematic cross-sectional view of the mechanical system of the FIG. 1 image printing apparatus, as viewed from the top thereof;
FIG. 4 is a block diagram schematically showing the arrangement of a control system of the FIG. 1 image printing apparatus;
FIG. 5 is a block diagram schematically showing the arrangement of a head control block shown in FIG. 4;
FIGS. 6A and 6B are views which are useful in explaining the function and arrangement of print heads and head nozzles mounted in a head unit;
FIGS. 7A to 7C are explanatory views which are useful in explaining the relationship between a print image, print image data, a k-th short line data item, and a k-th long line data item;
FIG. 8 is an explanatory view illustrating an example of a print image;
FIG. 9 is an explanatory view illustrating an example of a result of printing of a plurality copies of the print image;
FIG. 10 is an explanatory view similar to FIG. 9, which illustrates another example; and
FIGS. 11A and 11B are explanatory views similar to FIG. 9, which illustrate still other examples.

### DETAILED DESCRIPTION OF PREFERRED EMBODIMENT

The invention will now be described in detail with reference to the drawings showing an embodiment thereof. In the embodiment, an image printing method, an image printing apparatus, an image printing system, a label producing method, and a label producing system according to the invention are applied to an image printing system.

Referring first to FIG. 1, the image printing system PSYS includes am image forming system (or apparatus) WS0 including a personal computer, an engineering work station (EWS) or the like for forming print image data representing a desired print image, and the image printing apparatus 1 for printing a print image based on the print image data. The print image data formed by the image forming system WS0 is transferred (sent) to the image printing apparatus 1 via a first interface IF1 in units of line data items each representing one line of the print image data.

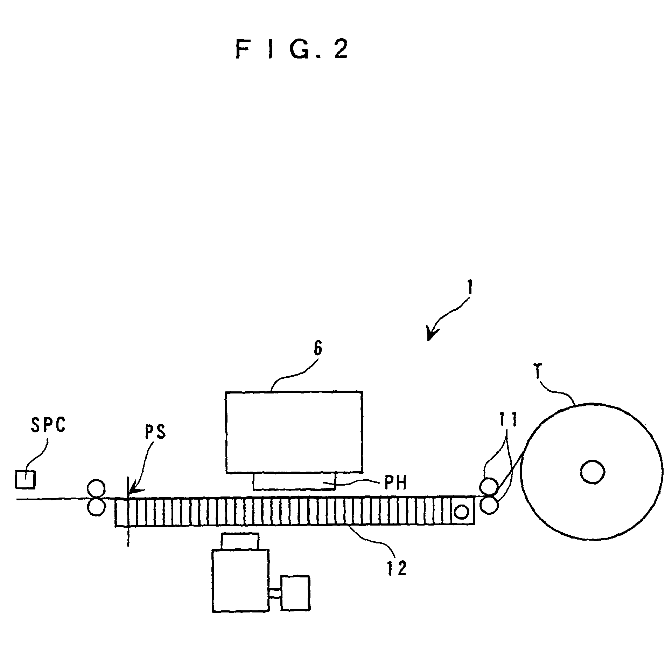

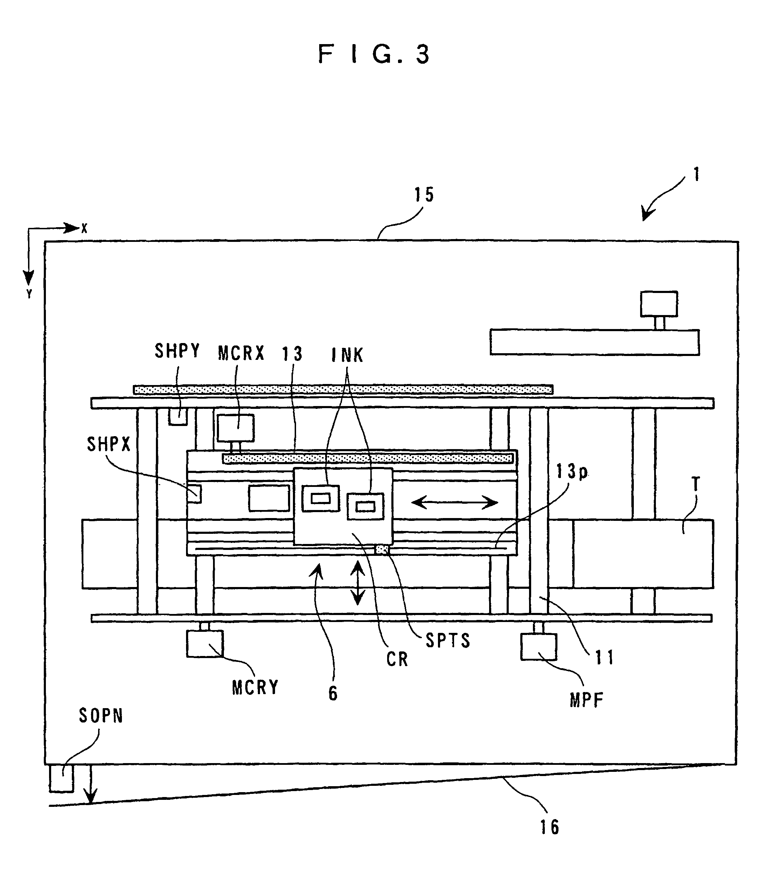

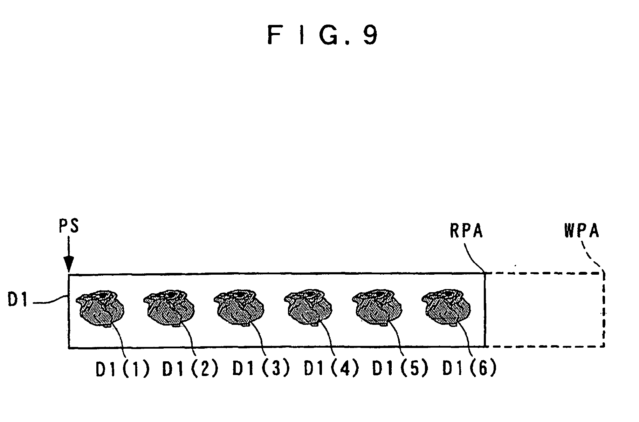

Next, as shown in FIGS. 1 to 3, in the image printing apparatus 1, a tape T supplied (mounted) in a state wound around a tape reel (on a right-hand side as viewed in FIG. 2) is used as a print medium. A paper feed (PF) roller 11 driven by a paper feed (PF) motor MPF rolls out the tape T to an attraction unit 12 which is used as a work area for printing operation, and a print head group (ink jet head group) PH, described in detail hereinafter with reference to FIG. 9, which is carried on a head unit 6 prints on the tape T as desired. The printed portion of the tape T is sequentially delivered out of the image printing apparatus 1 in a leftward direction as viewed in FIG. 2. The attraction unit 12 is configured such that during the desired printing operation, it can hold the tape T at a predetermined printing position by using a fan, not shown. The tape T includes a type, such as an ordinary paper tape, which has no adhesive surface on the reverse side thereof, and a type which has an adhesive surface formed on the reverse side thereof with a peel-off paper covering the adhesive surface. It should be noted that as shown in FIG. 3, the following description will be given assuming that the direction of the length of the tape T is set to the direction along the X axis or as a main scanning direction, and a direction orthogonal to the direction of the length of the tape T is set to the direction along the Y axis or as a sub scanning direction.

The head unit 6 includes a carriage CR carried on a main scanning unit 13, an ink cartridge INK removably mounted in the carriage CR to hold inks of six colors (black (K), yellow (Y), magenta (M), cyan (C), light magenta (LM), and light cyan (LC)), and the print head group PH which is installed on a lower portion of the carriage CR such that it can be opposed to the tape T. The main scanning unit 13 is driven by a sub scanning carriage motor MCRY such that it can move above the top of the attraction unit 12 in the sub scanning direction (the direction along the Y axis). Further, the carriage CR is driven by a main scanning carriage motor MCRX such that it can move in the main scanning direction (the direction along the X axis), whereby (the print head group PH of) the head unit 6 can move above the top of the attraction unit 12 (i.e. the top of the work area for printing operation.

In this embodiment, a position at a printable area (workable area) WPA (see FIG. 9 and the like) located downstream of the tape T (on a left-hand side as viewed in the figures, i.e. on a side where the coordinate value "X" is small) and on a rear side (on a rear side in FIG. 2; at an upper left location in FIG. 3, i.e. on a side where the coordinate value "Y" is small) of the image printing apparatus 1, is set to a print-starting position PS. A main scanning home position sensor SHPX for sensing a home position of the head unit 6 for the main scanning (along the X axis) is arranged on the carriage CR, and a sub scanning home position sensor SHPY for sensing a home position of the head unit 6 for the sub scanning (along the Y axis) is arranged at a location shown in FIG. 3 (inside a casing, where an upper end of the carriage CR can be sensed).

On the main scanning unit 13, a predetermined (e.g. monochrome) pattern image 13p is arranged such that it can be sensed optically. At a location on the carriage CR, opposed to the pattern image 13p, there is arranged a print timing sensor SPTS which detects the position of the carriage CR by itself by sensing the pattern of the pattern image 13p, for recognition of print timing. As shown in FIG. 3, the above-mentioned component parts of the image printing apparatus 1 is accommodated in a protective casing 15. It should be noted that in addition to the sensors described above, there are provided, for instance, a protective casing opening/closing sensor SOPN which detects the opening and closing of a lid 16 of the protective casing 15 and gives an emergency stop to printing operation if it is detected that the lid 16 is opened during the printing operation, and a paper position sensor SPC for sensing' the leading edge of the tape T.

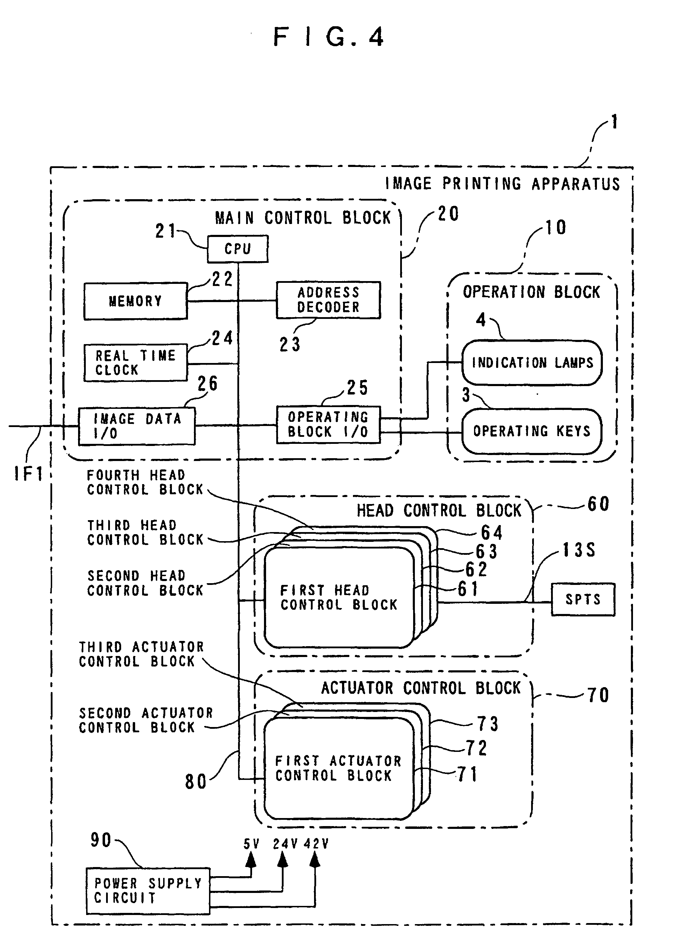

Next, the arrangement of the control system of the image printing apparatus 1 will be described. As shown in FIG. 4, the control system of the image printing apparatus includes an operating block 10 having indicator lamps 4 and operating keys 3 for interfacing with the user (man-machine interface), a head control block 60 for controlling the print head 6 and component parts associated therewith, an actuator control block 70 for controlling actuators associated with the respective motors, a power supply circuit 90 for supplying power to each block, and a main control block 20 which serves as a center for controlling the blocks of the image printing apparatus 1.

The main control block 20 includes a CPU 21,a memory 22, an address decoder 23, and a real time lock 24, as well as an operating block input/output. (operating block I/O) 25 for interfacing with the operating block 10, an image data input/output (image data I/O) 26 for communication with the above image forming system WSO via the first interface IF1 described above, all of which are connected to each other by an internal bus (CPU bus) 80 commonly used in the image printing apparatus 1. The head control block 60 includes first to fourth head control blocks 61 to 64. Similarly to the head control block 60, the actuator control block 70 also has a plurality of control blocks 71 to 73. However, detailed description thereof is omitted here.

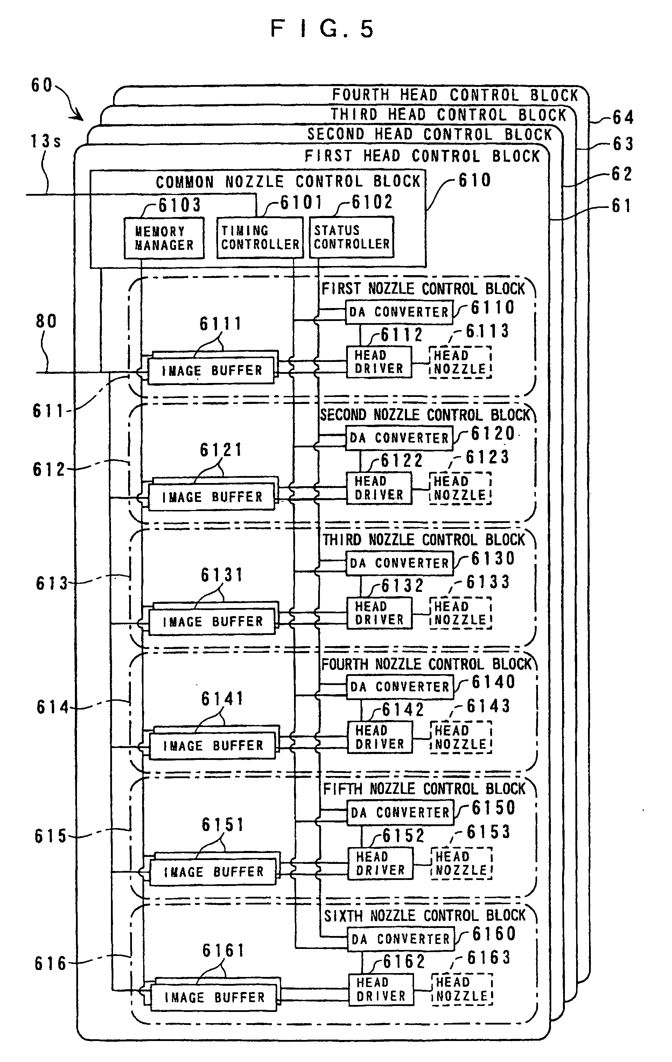

Referring to FIGS. 4 and 5, the first head control block 61 of the head control block 60 includes a common nozzle control block 610, and first to sixth nozzle control blocks 611 to 616.

The common nozzle control block 610 includes a timing controller 6101 which controls the timing of ejection of ink droplets from each nozzle of the print head group PH. This control of the timing of ejection of ink droplets is carried out in response to a detection signal (encoder signal) 13s indicative of the pattern of the pattern image 13p sensed by the print timing sensor SPTS. The common nozzle control block 610 also includes a status controller 6102 for controlling the state of each nozzle of the print head group PH, and a memory manager (M/M) 6103 for managing buffering of data in image buffers 6111, 6121, 6131, 6141, 6151, and 6161.

The first nozzle control block 611 includes a D/A converter (DAC) 6110, an image buffer 6111, and a head driver 6112 for driving a head nozzle 6113. The DA converter (DAC) 6110 is used for converting control signals (digital signals) from the timing controller 6101 and the status controller 6102 to the control waveforms (analog signals) of applied voltages for driving the head driver 6112 (for piezoelectric ejection). The other nozzle control blocks 612 to 616 are also configured similarly to the first nozzle control block 611. Further, the other head control blocks 62 to 64 are also constructed similarly to the first head control block 61.

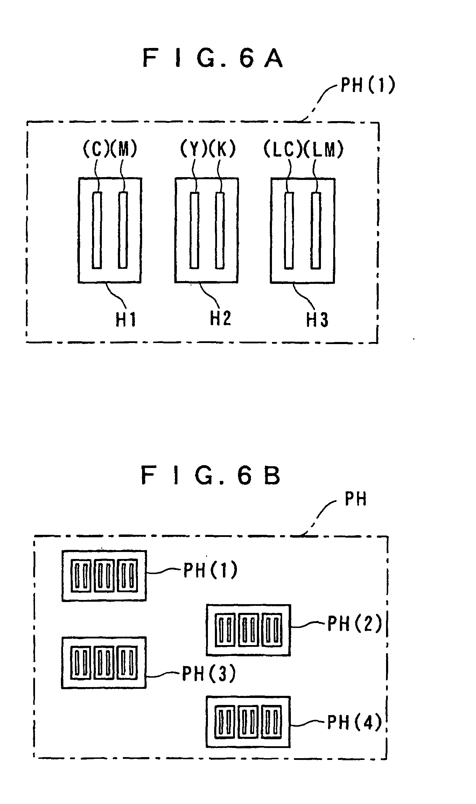

In this embodiment, six head nozzles 6113, 6123, 6133, 6143, 6153, and 6163, all of which are controlled by the first head control block 61, are nozzle arrays e.g. each comprised of 180 nozzles. Each of them is provided for ejecting an ink of one of the six colors (black (K), yellow (Y), magenta (M), cyan (C), light magenta (LM), light cyan (LC)). Let it be assumed, for instance, that as shown in FIG. 6A, three print heads H1 to H3 each having two nozzle arrays arranged therein are set to a print head group PH(1) which is controlled by the first head control block 61, and print head groups PH(2), PH(3), and PH(4) constructed similarly to the print head group PH(1) are controlled by the second to fourth head control blocks 62 to 64, respectively. In this case, as shown in FIG. 6B, the print head group PH used in the present embodiment includes the print head groups PH(1) to PH(4), and hence configured to have 4 times 3 heads (12-head configuration).

Further, the print head group PH may be configured such that the number of the head control blocks is changed according to a change in the specifications of the image printing apparatus, e.g. 6 times 3 heads (18-head configuration), or 3 times 3 heads (9-head configuration). Further, in this case, the image printing apparatus 1 may be configured, for instance, such that each head control block is formed by using one circuit board (head control board), thereby allowing the apparatus 1 to be changed in construction (specification) simply by inserting or extracting (mounting or removing) head control boards.

In the image printing apparatus 1, as described above with reference to FIGS. 1 and 4, the print image data formed by the image forming system WSO is received via the first interface IF1. In this embodiment, the print image data is sent from the image forming system WSO to the image printing apparatus 1 via the first interface IF1 in units of line data items each representing one line of the print image data.

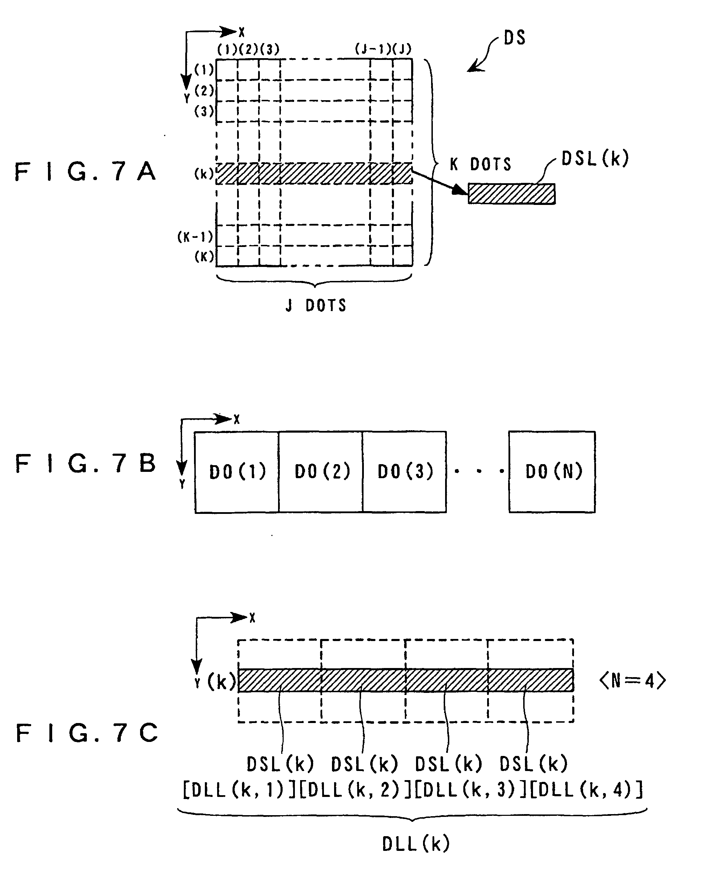

For instance, as shown in FIG. 7A, in the case of a print image DS of J dots, where J is an integer equal to or larger than 2, in the direction along the X axis by K dots, where K is an integer equal to or larger than 2, in the direction along the Y axis, line data items of the print image data representing the print image DS, each representing one line of J dots arranged in the direction along the X axis, are sequentially received from the image forming system (predetermined other end of communication) WS0 via the first interface IF1, whereby K line data items corresponding to K lines in the direction along the Y axis are sequentially received.

In the above case, in the image printing apparatus 1, as described hereinabove with reference to FIG. 4, K line data items are sequentially received by the image data I/O 26 via the first interface IF1. Further, when N copies of the print image (N is an integer equal to or larger than 2) are printed side by side in the direction along the X axis of a print medium, as shown in FIG. 7B, N print images D0(1) to D0(N) which are the same as the print image DS are printed.

Here, let it be assumed that as shown in FIG. 7A, a k-th line data item (k is an arbitrary integer defined as 1 ≦ k ≦ K) of the K line data items (corresponding to the K lines) of the print image DS is set to k-th short line data DSL(k). In the image printing apparatus 1, when the k-th short line data DSL(k) is received by the image data I/O 26, the k-th short line data DSL(k) is transmitted to the head control block 60 via the internal bus 80. When the head control block 60 has received the k-th short line data DSL(k), the head control block 60 stores, based on information as to the position (i.e. k) of the received data in the print image DS and a designated color (gradation value of a designated color) (given by a command from the CPU 21 or determined by itself), the k-th short line data DSL(k) in a corresponding image buffer of one of the head control blocks (e.g. in the image buffer 6111 of the first head control block 61).

After the k-th short line data DSL(k) has been stored, in the image printing apparatus 1, N copies of the k-th short line data DSL(k) are sequentially arranged side by side in the same image buffer (e.g. the image buffer 6111), whereby k-th long line data DLL(k) is formed which represents one line of N times J dots formed by arranging N times one line of J dots in the direction along the X axis. For instance, if N = 4, as shown in FIG. 7C, the k-th long line data DLL(k) is formed which represents one line of 4 (= N) times J dots formed by arranging 4 times one line of J dots in the direction along the X axis.

Then, one line of N times J dots (N = 4 in the above example) represented by the k-th long line data DLL(k) formed as above is set to a k-th line and printed on the tape (print medium) T in the direction along the X axis thereof. In this case, after the k-th line data (k-th short line data) DSL(k) has been received, N copies of the k-th line data item can be prepared to form the k-th long line data DLL(k), and one line of N times J dots can be printed whenever each line data item representing one line of J dots is received, without any need to await reception of all the K line data items, that is, reception of the whole print image data.

That is, the communication of print image data and printing of a plurality of print images formed thereafter based on the print image data can be performed by parallel processing. Therefore, in the image printing apparatus 1, it is possible to communicate print image data representing a desired print image in units of line data items each representing one line of the print image data, and at the same time print a plurality of the print images at an increased speed.

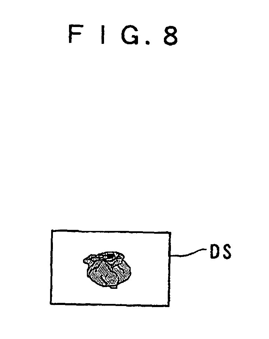

Now, in the image printing apparatus 1 according to the present embodiment, the print number N of copies of the print image to be printed can be specified by using one of the operating keys 3. This makes it possible to easily create the k-th long line data DLL(k) representing one line of N times J dots, based on the k-th short line data DSL(k) representing one line of J dots. Therefore, for instance, when the same six print images DS as shown in FIG. 8 are desired to be printed, by designating the print number N = 6, it is possible to print six print images D1(1) to D1(6) each of which is identical to the print image DS, as shown in FIG. 9.

It should be noted that similarly to the print image data (more specifically, each line data item), print number data indicative of the print number N of copies of the print image to be printed may be received e.g. from the image forming system WSO via the first interface IF1 or the like. In this case as well, the print number N can be definitely specified, thereby making it possible to easily create the k-th long line data DLL(k) representing one line of N times J dots, based on the k-th short line data DSL(k) representing one line of J dots.

Further, the image printing apparatus 1 may be configured such that the printable area (workable area) WPA described above with reference to FIG. 2, etc. is converted to the number of dots, and this number is defined beforehand as a predetermined printable dot number M indicative of the number of dots which can be printed in the direction along the X axis, e.g. based on the k-th long line data DLL(k), thereby allowing the print number N of copies of the print image DS to be set or determined based on the number J of dots of the print image DS in the direction along the X axis and the predetermined printable dot number M. In this case, since N times J ≦ M holds, the print number N of copies of the print image DS can be properly determined based on the number J of dots of the print image DS in the direction along the X axis and the predetermined printable dot number M, whereby it is possible to easily form the k-th long line data DLL(k) representing one line of N times J dots, based on the k-th short line data DSL(k) representing one line of J dots.

Further, it is also possible to set the length of the printable area WPA in the direction along the X axis directly to the predetermined printable length L. For instance, the length of the printable area WPA may be defined beforehand as the predetermined printable length L within which the print images DS can be printed in the direction along the X axis of the printable area WPA, thereby allowing the print number N of copies of the print image DS to be determined based on the number J of dots of the print image DS in the direction along the X axis, a print density, and the predetermined printable length L. In this case, since J times N times print density ≦ L holds, the print number N of copies of the print image DS to be printed can be determined based on the number J of dots of the print image DS in the direction along the X axis, the print density, and the predetermined printable length L, whereby it is possible to easily form the k-th long line data DLL(k) representing one line of N times J dots, based on the k-th short line data DSL(k) representing one line of J dots.

Further, when the print number N of copies of the print image DS to be printed is determined based on the number J of dots of the print image DS in the direction along the X axis, the print density, and the predetermined printable length L, the image printing apparatus 1 may be configured such that the print density can be designated by using the operating key 3 or the like. If the image printing apparatus 1 is configured such that candidates (options) for the print density in the direction along the X axis, such as 180 dot/inch (dpi), 360 dpi, 720 dpi, etc., and the state of selection of the option (present print density) can be displayed on a display panel or the indicator lamp 4, it is convenient to specify (select) a print density and grasp the present state of selection of the option. In the above cases, since the print density is designated, the print number N of copies of the print image DS satisfying the expression J x N x print density ≦ L can be determined with ease, thereby making it possible to easily form the k-th long line data DLL(k) based on the k-th short line data DSL(k).

Further, similarly to the print image data, print density data indicative of a print density may be received via the first interface IF1 or the like. In this case as well, the print density can be definitely specified, and hence the print number N of copies of the print image DS satisfying the expression J x N x print density ≦ L can be determined with ease. This makes it possible to easily form the k-th long line data DLL(k) based on the k-th short line data DSL(k).

Further, when the print number N of copies of the print image DS to be printed is determined based on the predetermined printable dot number M, or based on the print density and the predetermined printable length L, the number J of dots of the print image DS in the direction along the X axis may be detected based on received line data. In this case, if the breaks of, that is, the leading and trailing edges of line data corresponding to each line can be detected, the number J of dots of the print image DS in the direction along the X axis can be detected based on each line data item. Of course, dot number data indicative of the number J of dots may be received via the first interface IF1 or the like. In any of the above cases, the number J of dots can be definitely specified, and hence the print number N of copies of the print image DS can be determined with ease, thereby making it possible to easily form the k-th long line data DLL(k) based on the k-th short line data DSL(k).

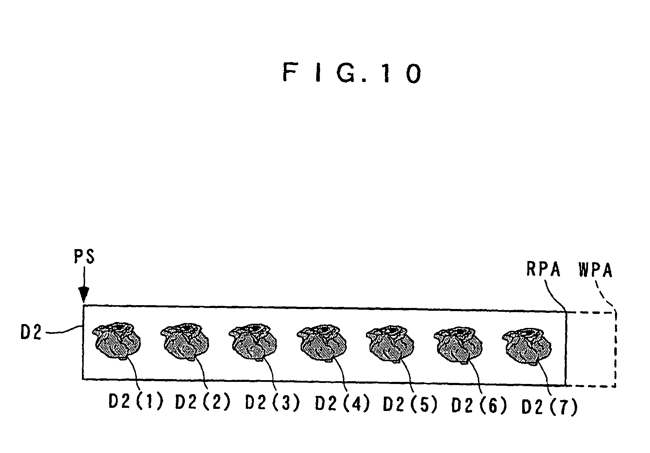

In the above cases, for instance, when a plurality of the print images DS shown in FIG. 8 are printed, the maximum number of copies of the print image DS which can be arranged in the same printable area WPA as shown in FIG. 9 is "7", and the print number N can be set to 7, thereby making it possible to easily form the k-th long line data DLL(k) representing one line of J x 7 dots, based on the k-th short line data DSL(k) representing one line of J dots. Consequently, for instance, as shown in FIG. 10, it is possible to print seven print images D1(1) to D1(7) each of which is identical to the print image DS.

Especially, in the image printing apparatus 1 according to the present embodiment, the print medium is a continuous tape T, and mounted in the apparatus such that the direction of the length thereof coincides with the direction along the X axis. More specifically, the print images can be printed on the tape T side by side in the direction of the length of the tape T, and the print number N of copies of the print image can be increased with ease. This makes it possible to easily form the k-th long line data DLL(k) representing one line of N times J dots formed by a larger number (number corresponding to a larger value of N) of copies of the original print image, based on the k-th short line data DSL(k) representing one line of J dots received. Thus, the communication of print image data and printing of a plurality of print images formed based on the print image data can be carried out with enhanced parallelism, which makes it possible to communicate print image data representing a desired print image in units of line data items each representing one line of the print image data, and at the same time print a plurality of the print images at a further increased speed.

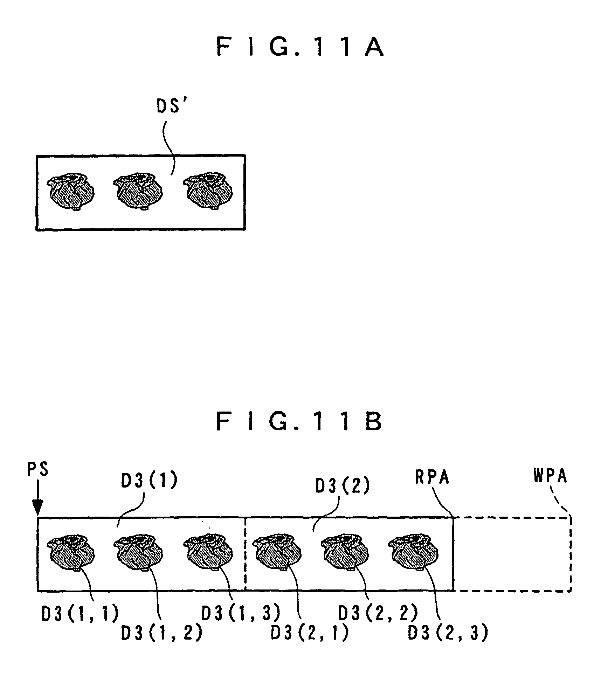

Although in the examples described above with reference to FIGS. 9 and 10, the single print image DS shown in FIG. 8 is used as an original print image, this is not limitative, but if, as shown in FIG. 11A, a print image DS' approximately three times as large as the single print image DS (three copies of the print image DS) is directly formed in the image forming system WSO, and two copies of this print image DS' are printed (D3(1), D3(2)) by the image printing apparatus 1, the result of printing of the print images DS is the same as shown in FIG. 9. In this case, the same result can be obtained if the print number N is received from the image forming system WSO, if it is designated in the image printing apparatus 1, or if it is obtained as the maximum number of print images DS from the printable area WPA.

Next, referring again to FIG. 1, the image forming system (or apparatus) WSO in the image printing system PSYS will be described hereinafter. The image forming system WSO forms print image data representing a desired print image DS of J dots in the direction along the X axis by K dots in the direction along the Y axis and sequentially transmits K line data items of the print image data via the first interface IF1.

In the image printing apparatus 1 on a receiving side, as described hereinabove, when the k-th line data (k-th short line data) DSL(k) of the K line data items corresponding to the K lines is received, the k-th long line data DLL(k) is formed which represents one line of N times J dots formed by arranging N lines of J dots in the direction along the X axis, and the one line of N times J dots represented by the k-th long line data DLL(k) is printed as the k-th line on a print medium (tape) T in the direction along the X axis thereof.

Therefore, in the image printing system PSYS, the communication of print image data and printing of a plurality of print images formed based on the print image data can be performed with enhanced parallelism. This enables print image data representing a desired print image DS to be communicated via the first interface IF1 in units of line data items each representing one line of the print image data, and at the same time enables a plurality of copies (N copies) of the print image DS to be printed at an increased speed.

Here, it is preferred that the first interface IF1 enables communication in conformity to any of the interface standards of RS-232C, USB (Universal Serial Bus), IEEE1394, Centronics, etc. Therefore, in the image printing apparatus 1, the image data I/O 26 described above with reference to FIG. 4 is compatible with the above interface standards (including interfaces conforming to any of these standards). Needless to say, the image forming system (device) WSO, which has a personal computer, an EWS, or the like, is compatible with these typical standards so that the system WSO can perform communications in conformity to the standards via the first interface IF1.

It should be noted that the above standards are for wired communication and compatible not only with serial data communication (in the case of RS-232C, USB, IEEE1394, etc.) but also with parallel data communication (in the case of Centronics, etc). Therefore, in the image printing system PSYS, whichever of the above interface standards may be employed for communication, it is possible to communicate print image data representing a desired print image DS in units of line data items via the first interface IF1, and at the same time print a plurality of (N) copies of the print image DS at a high speed. It goes without saying that the first interface IF1 can be one enabling wireless communication.

Further, as shown in FIG. 1, in the image printing system PSYS, it is also possible to configure the image forming system WSO such that it is comprised of (or replaced by) a work station WS2 having a personal computer or the like (personal computer, EWS, etc.) for use in designing print images, and a work station WS1 including a personal computer or the like for outputting print line data.

In this embodiment, the work station WS2 forms print image data representing a desired print image DS of J dots in the direction along the X axis by K dots in the direction along the Y axis, where J is an integer equal to or larger than 2 and K is an integer equal to or larger than 2, and transmits the print image data via the secon interface IF2. On the other hand, the work station WS1 divides the received print image data into K line data items to sequentially send the K line data items one by one via the first interface IF1. The image printing apparatus 1 produces a k-th long line data DLL(k) based on a k-th short line data DSL(k), and prints one line of N times J dots represented by the produced k-th long line data DLL(k) as a k-th line on the tape (print medium) T in the direction along the X axis thereof.

Therefore, in this case as well, the image printing system PSYS is capable of performing the communication of print image data and printing of a plurality of print images formed based on the print image data with enhanced parallelism, thereby making it possible to communicate print image data representing a desired print image DS via the first interface IF1 in units of.line data items each representing one line of the print image data, and at the same time print a plurality of (N) copies of the print image DS at an increased speed.

In this embodiment, it is preferred that the second interface IF2 enables communication via a predetermined network. For instance, when the predetermined network includes the Internet and a predetermined local area network (LAN), the second interface IF2 enables communication via the predetermined network including the Internet and the predetermined LAN. In the image printing system PSYS, it is possible not only to communicate print image data representing a desired print image DS via the second interface IF2 through the network including the Internet and the LAN, but also to communicate the print image data via the first interface IF1 in units of line data items each representing one line of the print image data, and at the same time accelerate printing of a plurality of(N) copies of the print image DS.

Further, it is preferred that the second interface IF2 enables communication in conformity to an IEEE standard LAN-based communication protocol. This makes it possible to communicate print image data representing a desired print image DS via the second interface IF2 according to the IEEE standard LAN-based communication protocol, and at the same time communicate the print image data via the first interface IF1 in units of line data items each representing one line of the print image data, thereby accelerating printing of a plurality of (N) copies of the print image DS.

Further, it is preferred that the second interface IF2 enables communication in conformity to at least one of the data link protocols of Ethernet, FDDI (Fiber Distributed Data Interface), and ATM (Asynchronous Transfer Mode). This makes it possible to communicate print image data representing a desired print image DS via the second interface IF2 according to the at least one of the data link protocols of Ethernet, FDDI, and ATM, and at the same time communicate the print image data via the first interface IF1 in units of line data items each representing one line of the print image data, thereby accelerating printing of a plurality of (N) copies of the print image DS.

It should be noted that in addition to the above data link protocols, those of Token Ring, 100VG-Any LAN, Fiber Channel, HIPPI (High Performance Parallel Interface), IEEE1394 (Fire Wire), and so forth can be used. Although the protocols of Token Ring and the like are also according to wired communication standards, it goes without saying that the second interface IF2 can employ wireless communication according to at least one of the protocols.

Referring to FIG. 1, after printing of the plurality of (N) copies of the print image DS have been terminated in the image printing system PSYS, printed portions of the tape (print medium) T, each having one of the N print images DS printed thereon are used. By using the printed portions of the tape T, it is possible to produce, for instance, labels each having one copy of the print image DS printed thereon. More specifically, in the image printing system PSYS, N copies of the print image DS can be printed at a high speed, so that it is possible to use printed portions of the tape (print medium) T, each having one of N copies of the print image DS printed thereon to produce labels each having one print image DS printed thereon.

In this embodiment, by cutting off the printed portions of the print medium, each having one print image printed thereon, it is possible to produce labels having one print image printed thereon. Further, as described hereinbefore, the tape T includes a type which has no adhesive surface on the reverse side thereof, and a type with an adhesive surface on the reverse side thereof being covered with a peel layer. The tape T of the latter type is constructed such that by peeling off the peel layer on a reverse side thereof, it can be affixed to a predetermined object article with the print image DS being printed on the surface thereof. Therefore, if labels each having one print image printed thereon are produced by using the printed portions of the print medium, each having one of N copies of the print image printed thereon, they provide labels which can be affixed to the predetermined object articles by peeling off the peel layer therefrom.

Further, as described above with reference to FIG. 11A, when not a single print image DS as shown in FIG. 8 but a plurality of (three, in the above-mentioned example) copies of the print image DS are formed directly, six copies of the print image DS can be produced by designating the print number N = 2. In this case, the image printing apparatus 1 may be configured such that the print number of the six print images DS can be designated, so to speak, as an image unit number GN = 6 in place of (or in combination with) the print number N = 2. In this case, as in the case of the example shown in FIG. 11A, if three copies of the print image DS are formed directly, and the image unit number GN = 100 is specified, for instance, the print number N becomes equal to 34 in total (since 100 divided by 3 is 33 and remainder 1), and two extra copies of the print image are printed on the last one strip of the tape T. In such a case, only the required number of print images (one print image, for instance) may be printed on the last one strip by limiting a printing area (shift amount or print number of the same single images) in the main scanning direction (direction along the X axis). Further, in the above cases, similarly to the print number N, the image unit number GN may be received from the image forming system WSO, or designated in the image printing apparatus 1.

It should be noted that various types of image printing system can be adopted in addition to the above examples so long as they can communicate print image data in units of line data items each representing one line of the print image data.

## Claims

1. A method of printing N copies of a print image, where N is an integer equal to or larger than 2, on a print medium side by side in a direction along an X axis of the print medium, assuming that two axes orthogonal to each other on a two-dimensional rectangular coordinate system are set to the X axis and a Y axis, the print image being formed of J dots in the direction along the X axis by K dots in a direction along the Y axis, where J is an integer equal to or larger than 2 and K is an integer equal to or larger than 2,
the method comprising the steps of:
a) receiving a k-th line data item of print image data representing the k-th line of the J dots arranged in the direction along the X axis of the print image, according to a predetermined communication protocol from a predetermined other end of communication, wherein k is an arbitrary integer defined as 1 ≤ k ≤ K;
b) setting the k-th line data item of the K line data items to a k-th short line data item, and sequentially arranging N copies of the k-th short line data item side by side to form a k-th long line data item representing one line of N times J dots formed by arranging N lines of the J dots in the direction along the X axis; and
c) printing the one line of N times J dots represented by the k-th long line data item, as a k-th line on the print medium in the direction along the X axis thereof while, at the same time, repeating steps a) to c) to thereby sequentially receive K line data items corresponding to K lines in the direction along the Y axis.

2. A method according to claim 1, further including the step of specifying the integer N which is a number of copies of the print image.

3. A method according to claim 1, further including the step of receiving print number data indicative of the integer N which is a number of copies of the print image.

4. A method according to claim 1, wherein a predetermined printable dot number M which is a number of dots printable in the direction along the X axis is determined based on the k-th long line data item,
the method further including the step of determining the integer N which is a number of copies of the print image, based on the integer J which is a number of dots of the print image in the direction along the X axis and the predetermined printable dot number M.

5. A method according to claim 1, wherein a predetermined printable length L within which printing can be carried out in the direction along the X axis is determined based on the k-th long line data item,
the method further including the step of determining the integer N which is a number of copies of the print image, based on the integer J which is a number of dots of the print image in the direction along the X axis, a print density, and the predetermined printable length L.

6. A method according to claim 5, further including the step of specifying the print density.

7. A method according to claim 5, further including the step of receiving print density data indicative of the print density.

8. A method according to claim 4, further including the step of detecting the integer J, based on received line data.

9. A method according to claim 4, further including the step of receiving dot number data indicative of the integer J.

10. A method according to claim 1, wherein the print medium is in a continuous form and mounted such that a direction of length thereof coincides with the direction along the X axis.

11. A method according to claim 1, further comprising the steps of:
forming the print image data; and
sequentially transmitting the K line data items of the formed print image data via a first interface,
wherein the step of sequentially receiving the K line data items corresponding to the K lines in the direction along the Y axis includes receiving the K line data items via the first interface.

12. A method according to claim 11, wherein the first interface enables communication in conformity to an interface standard of RS-232C, USB, or IEEE1394.

13. A method according to claim 11, wherein the first interface enables communication in conformity to the Centronics standard.

14. A method according to claim 11, wherein the step of sequentially transmitting the K line data items via the first interface includes the steps of:
transmitting the print image data via a second interface;
receiving the print image data via the second interface and dividing the print image data into the K line data items; and
sequentially transmitting the divided K line data items one by one via the first interface.

15. A method according to claim 14, wherein the second interface enables communication via a predetermined network.

16. A method according to claim 15, wherein the predetermined network includes the Internet.

17. A method according to claim 15, wherein the predetermined network includes a predetermined local area network.

18. A method according to claim 14, wherein the second interface enables communication in conformity to an IEEE standard LAN-based communication protocol.

19. A method according to claim 14, wherein the second interface enables communication in conformity to at least one of data link protocols of Ethernet, FDDI, and ATM.

20. Use of the method of claim 1 for producing a plurality of labels each having the print image printed thereon by using each of portions of the print medium on which the N copies of the print image are printed, respectively.

21. The use according to claim 20, including the step of cutting off the portions of the print medium into respective separate portions.

22. The use according to claim 20, wherein the print medium is formed such that the print medium can be affixed to a predetermined object article with the print image printed on a surface thereof, by peeling off a peel layer on a reverse side thereof.

23. An image printing apparatus for printing N copies of a print image, where N is an integer equal to or larger than 2, on a print medium side by side in a direction along an X axis of the print medium, assuming that two axes orthogonal to each other on a two-dimensional rectangular coordinate system are set to the X axis and a Y axis, the print image being formed of J dots in the direction along the X axis by K dots in a direction along the Y axis, where J is an integer equal to or larger than 2 and K is an integer equal to or larger than 2,
the image printing apparatus comprising:
line data-receiving means for receiving a k-th line data item of print image data representing the k-th line of the J dots arranged in the direction along the X axis of the print image, according to a predetermined communication protocol from a predetermined other end of communication, wherein k is an arbitrary integer defined as 1 ≤ k ≤ K;
long line data-forming means for setting the k-th line data item of the K line data items to a k-th short line data item when the k-th line data item is received, and sequentially arranging N copies of the k-th short line data item side by side to form a k-th long line data item representing one line of N times J dots formed by arranging N lines of the J dots in the direction along the X axis; and
line printing means for printing the one line of N times J dots represented by the k-th long line data item, as a k-th line on the print medium in the direction along the X axis thereof,
said line data-receiving means and said line printing means being adapted to operate in parallel such that the line printing means prints the k-th line while the line data-receiving means receives the data for a following line.

24. The apparatus according to claim 23, further including print number-specifying means for specifying the integer N which is a number of copies of the print image.

25. The apparatus according to claim 23, further including print number data-receiving means for receiving print number data indicative of the integer N which is a number of copies of the print image.

26. The apparatus according to claim 23, wherein a predetermined printable dot number M which is a number of dots printable in the direction along the X axis is determined based on the k-th long line data item,
the apparatus further including means for determining the integer N which is a number of copies of the print image, based on the integer J which is a number of dots of the print image in the direction along the X axis and the predetermined printable dot number M.

27. The apparatus according to claim 23, wherein a predetermined printable length L within which printing can be carried out in the direction along the X axis is determined based on the k-th long line data item,
the image printing apparatus further including print number-determining means for determining the integer N which is a number of copies of the print image, based on the integer J which is a number of dots of the print image in the direction along the X axis, a print density, and the predetermined printable length L.

28. The apparatus according to claim 27, further including print density-specifying means for specifying the print density.

29. The apparatus according to claim 27, further including print density data-receiving means for receiving print density data indicative of the print density.

30. The apparatus according to claim 26, further including dot number-detecting means for detecting the integer J, based on received line data.

31. The apparatus according to claim 26, further including dot number data-receiving means for receiving dot number data indicative of the integer J.

32. The apparatus according to claim 23, wherein the print medium is in a continuous form and mounted such that a direction of length thereof coincides with the direction along the X axis.

33. An image printing system comprising:
image printing apparatus according to claim 23,
print image data-forming means for forming the print image data; and
print image data-transmitting means for sequentially transmitting the K line data items of the formed print image data via a first interface,
wherein the line data-receiving means receives the K line data items via the first interface.

34. The system according to claim 33, wherein the first interface enables communication in conformity to an interface standard of RS-232C, USB, or IEEE1394.

35. The system according to claim 33, wherein the first interface enables communication in conformity to the Centronics standard.

36. The system according to claim 33, wherein said print image data-transmitting means comprises:
image data-transmitting means for transmitting the print image data via a second interface;
data dividing means for receiving the print image data via the second interface and dividing the print image data into the K line data items; and
line data-transmitting means for sequentially transmitting the divided K line data items one by one via the first interface.

37. The system according to claim 36, wherein the second interface enables communication via a predetermined network.

38. The system according to claim 37, wherein the predetermined network includes the Internet.

39. The system according to claim 37, wherein the predetermined network includes a predetermined local area network.

40. The system according to claim 36, wherein the second interface enables communication in conformity to an IEEE standard LAN-based communication protocol.

41. The system according to claim 36, wherein the second interface enables communication in conformity to at least one of data link protocols of Ethernet, FDDI, and ATM.

42. Use of the image printing apparatus according to claim 23 for producing a plurality of labels each having the print image printed thereon by using each of portions of the print medium on which the N copies of the print image are printed, respectively.

43. The use according to claim 42, wherein said label producing means includes cutting means for cutting off the portions of the print medium into respective separate portions.

44. The use according to claim 42, wherein the print medium is formed such that the print medium can be affixed to a predetermined object article with the print image printed on a surface thereof, by peeling off a peel layer on a reverse side thereof.

## Patentansprüche

1. Verfahren zum Drucken von N Kopien eines Druckbildes, wobei N eine ganze Zahl gleich oder größer 2 ist, nebeneinander auf einem Druckmedium in Richtung entlang einer X-Achse des Druckmediums, wobei angenommen wird, dass zwei senkrecht aufeinander stehende Achsen in einem zweidimensionalen Koordinatensystem als die X- und Y-Achse eingestellt sind, wobei das Druckbild aus J Punkten in Richtung entlang der X-Achse mal K Punkten in Richtung entlang der Y-Achse gebildet wird, wobei J eine ganze Zahl gleich oder größer 2 und K eine ganze Zahl gleich oder größer 2 ist,
wobei das Verfahren die Schritte aufweist:
a) Empfangen einer k-ten Zeilendatengruppe aus Druckbilddaten, die die k-te Zeile aus den J Punkten repräsentiert, die in Richtung entlang der X-Achse des Druckbildes angeordnet sind, gemäß einem vorgegebenen Kommunikationsprotokoll von einem vorgegebenen anderen Kommunikationsende, wobei k eine beliebige ganze Zahl ist, die als 1 ≤ k ≤ K definiert ist;
b) Setzen der k-ten Zeilendatengruppe der K Zeilendatengruppen auf eine k-te Kurzzeilendatengruppe und sequentielles Anordnen der N Kopien der k-ten Kurzzeilendatengruppe nebeneinander, um eine k-te Langzeilendatengruppe zu bilden, die eine Zeile aus N mal J Punkten repräsentiert, die durch Anordnen von N Zeilen der J Punkte in Richtung entlang der X-Achse gebildet wird; und
c) Drucken der einen Zeile aus N mal J Punkten, die durch die k-te Langzeilendatengruppe repräsentiert wird, als k-te Zeile auf das Druckmedium in Richtung entlang der X-Achse desselben, während gleichzeitig die Schritte a) bis c) wiederholt werden, um K Zeilendatengruppen entsprechend K Zeilen in Richtung entlang der Y-Achse sequentiell zu empfangen.

2. Verfahren nach Anspruch 1, das ferner den Schritt der Vorgabe der ganzen Zahl N enthält, bei der es sich um die Anzahl der Kopien des Druckbildes handelt.

3. Verfahren nach Anspruch 1, das ferner den Schritt des Empfangens der Druckzahldaten enthält, die die ganze Zahl N angeben, bei der es sich um die Anzahl der Kopien des Druckbildes handelt.

4. Verfahren nach Anspruch 1, bei dem eine vorgegebene Anzahl M druckbarer Punkte, bei der es sich um eine Anzahl Punkte handelt, die in Richtung entlang der X-Achse druckbar sind, auf Basis der k-ten Langzeilendatengruppe bestimmt wird,
wobei das Verfahren ferner den Schritt der Bestimmung der ganzen Zahl N, bei der es sich um die Anzahl der Kopien des Druckbildes handelt, auf Basis der ganzen Zahl J, bei der es sich um die Anzahl Punkte des Druckbildes in Richtung entlang der X-Achse handelt, und der vorgegebenen Anzahl M druckbarer Punkte enthält.

5. Verfahren nach Anspruch 1, bei dem eine vorgegebene druckbare Länge L, innerhalb der Drucken in Richtung entlang der X-Achse ausgeführt werden kann, auf Basis der k-ten Langzeilendatengruppe bestimmt wird,
wobei das Verfahren ferner den Schritt der Bestimmung der ganzen Zahl N, bei der es sich um die Anzahl der Kopien des Druckbildes handelt, auf Basis der ganzen Zahl J, bei der es sich um die Anzahl Punkte des Druckbildes in Richtung entlang der X-Achse handelt, der Druckdichte und der vorgegebenen druckbaren Länge L enthält.

6. Verfahren nach Anspruch 5, das ferner den Schritt der Vorgabe der Druckdichte enthält.

7. Verfahren nach Anspruch 5, das ferner den Schritt des Empfangens der Druckdichtedaten, die die Druckdichte angeben, enthält.

8. Verfahren nach Anspruch 4, das ferner den Schritt des Erkennens der ganzen Zahl J auf Basis der empfangenen Zeilendaten enthält.

9. Verfahren nach Anspruch 4, das ferner den Schritt des Empfangens von Punktanzahldaten, die die ganze Zahl J angeben, enthält.

10. Verfahren nach Anspruch 1, bei dem das Druckmedium ein Endlosformular ist und so eingelegt ist, dass seine Längsrichtung mit der Richtung entlang der X-Achse zusammenfällt.

11. Verfahren nach Anspruch 1, ferner die Schritte aufweisend:
Bilden der Druckbilddaten; und
sequentielles Übertragen der K Zeilendatengruppen der gebildeten Druckbilddaten über eine erste Schnittstelle,
wobei der Schritt des sequentiellen Empfangens der K Zeilendatengruppen entsprechend den K Zeilen in Richtung entlang der Y-Achse das Empfangen der K Zeilendatengruppen über die erste Schnittstelle enthält.

12. Verfahren nach Anspruch 11, bei dem die erste Schnittstelle die Kommunikation gemäß einer Schnittstellennorm von RS-232C, USB oder IEEE1394 ermöglicht.

13. Verfahren nach Anspruch 11, bei dem die erste Schnittstelle die Kommunikation gemäß der Centronics-Norm ermöglicht.

14. Verfahren nach Anspruch 11, bei dem der Schritt des sequentiellen Übertragens der K Zeilendatengruppen über die erste Schnittstelle die Schritte enthält:
Übertragen der Druckbilddaten über eine zweite Schnittstelle;
Empfangen der Druckbilddaten über die zweite Schnittstelle und Teilen der Druckbilddaten in die K Zeilendatengruppen; und
sequentielles Übertragen der geteilten K Zeilendatengruppen nacheinander über die erste Schnittstelle.

15. Verfahren nach Anspruch 14, bei dem die zweite Schnittstelle die Kommunikation über ein vorgegebenes Netz ermöglicht.

16. Verfahren nach Anspruch 15, bei dem das vorgegebene Netz das Internet einschließt.

17. Verfahren nach Anspruch 15, bei dem das vorgegebene Netz ein vorgegebenes lokales Netz einschließt.

18. Verfahren nach Anspruch 14, bei dem die zweite Schnittstelle die Kommunikation gemäß einem LAN-basierten IEEE-Norm-Kommunikationsprotokoll ermöglicht.

19. Verfahren nach Anspruch 14, bei dem die zweite Schnittstelle die Kommunikation gemäß mindestens einem der Datenübertragungsprotokolle von Ethernet, FDDI und ATM ermöglicht.

20. Anwendung des Verfahrens gemäß Anspruch 1 zum Erzeugen einer Mehrzahl Etiketten, von denen ein jedes das darauf aufgedruckte Druckbild trägt, durch Verwenden jedes der Abschnitte des Druckmediums, auf dem die N Kopien des Druckbildes aufgedruckt sind.

21. Anwendung nach Anspruch 20, die den Schritt des Abschneidens der Abschnitte des Druckmediums zur Bildung entsprechender getrennter Abschnitte enthält.

22. Anwendung nach Anspruch 20, bei der das Druckmedium so ausgebildet ist, dass das Druckmedium an einem vorgegebenen Gegenstand mit auf der Oberfläche aufgedrucktem Druckbild durch Abziehen einer Abziehschicht auf seiner Rückseite angebracht werden kann.

23. Bilddruckvorrichtung zum Drucken von N Kopien eines Druckbildes, wobei N eine ganze Zahl gleich oder größer 2 ist, nebeneinander auf einem Druckmedium in Richtung entlang einer X-Achse des Druckmediums, wobei angenommen wird, dass zwei senkrecht aufeinander stehende Achsen in einem zweidimensionalen Koordinatensystem als die X- und Y-Achse eingestellt sind, wobei das Druckbild aus J Punkten in Richtung entlang der X-Achse mal K Punkten in Richtung entlang der Y-Achse gebildet wird, wobei J eine ganze Zahl gleich oder größer 2 und K eine ganze Zahl gleich oder größer 2 ist,
wobei die Bilddruckvorrichtung aufweist:
Zeilendatenempfangsmittel zum Empfangen einer k-ten Zeilendatengruppe aus Druckbilddaten, die die k-te Zeile aus den J Punkten repräsentiert, die in Richtung entlang der X-Achse des Druckbildes angeordnet sind, gemäß einem vorgegebenen Kommunikationsprotokoll von einem vorgegebenen anderen Kommunikationsende, wobei k eine beliebige ganze Zahl ist, die als 1 ≤ k ≤ K definiert ist;
Langzeilendatenbildungsmittel zum Setzen der k-ten Zeilendatengruppe der K Zeilendatengruppen auf eine k-te Kurzzeilendatengruppe und sequentielles Anordnen von N Kopien der k-ten Kurzzeilendatengruppe nebeneinander, um eine k-te Langzeilendatengruppe zu bilden, die eine Zeile aus N mal J Punkten repräsentiert, die durch Anordnen von N Zeilen der J Punkte in Richtung entlang der X-Achse gebildet wird; und
Zeilendruckmittel zum Drucken der einen Zeile aus N mal J Punkten, die durch die k-te Langzeilendatengruppe repräsentiert wird, als k-te Zeile auf das Druckmedium in Richtung entlang der X-Achse desselben,
wobei die Zeilendatenempfangsmittel und die Zeilendruckmittel so ausgeführt sind, dass sie in der Weise parallel arbeiten, dass die Zeilendruckmittel die k-te Zeile drucken, während die Zeilendatenempfangsmittel die Daten für eine folgende Zeile empfangen.

24. Vorrichtung nach Anspruch 23, ferner Druckzahlvorgabemittel zum Vorgeben der ganzen Zahl N, bei der es sich um die Anzahl der Kopien des Druckbildes handelt, enthaltend.

25. Vorrichtung nach Anspruch 23, ferner Druckzahldatenempfangsmittel zum Empfangen von Druckzahldaten, die die ganze Zahl N angeben, bei der es sich um die Anzahl der Kopien des Druckbildes handelt, enthaltend.

26. Vorrichtung nach Anspruch 23, bei der eine vorgegebene Anzahl M druckbarer Punkte, bei der es sich um eine Anzahl Punkte handelt, die in Richtung entlang der X-Achse druckbar sind, auf Basis der k-ten Langzeilendatengruppe bestimmt wird,
wobei die Vorrichtung ferner Mittel umfaßt zur Bestimmung der ganzen Zahl N, bei der es sich um die Anzahl der Kopien des Druckbildes handelt, auf Basis der ganzen Zahl J, bei der es sich um die Anzahl Punkte des Druckbildes in Richtung entlang der X-Achse handelt, und der vorgegebenen Anzahl M druckbarer Punkte.

27. Vorrichtung nach Anspruch 23, bei der eine vorgegebene druckbare Länge L, innerhalb der Drucken in Richtung entlang der X-Achse ausgeführt werden kann, auf Basis der k-ten Langzeilendatengruppe bestimmt wird,
wobei die Bilddruckvorrichtung ferner Druckzahlbestimmungsmittel zur Bestimmung der ganzen Zahl N, bei der es sich um die Anzahl der Kopien des Druckbildes handelt, auf Basis der ganzen Zahl J, bei der es sich um die Anzahl Punkte des Druckbildes in Richtung entlang der X-Achse handelt, der Druckdichte und der vorgegebenen druckbaren Länge L enthält.

28. Vorrichtung nach Anspruch 27, ferner Druckdichtevorgabemittel zum Vorgeben der Druckdichte enthaltend.

29. Vorrichtung nach Anspruch 27, ferner Druckdichtedatenempfangsmittel zum Empfangen von die Druckdichte angebenden Druckdichtedaten enthaltend.

30. Vorrichtung nach Anspruch 26, ferner Punktanzahldetektormittel zum Erkennen der ganzen Zahl J auf Basis der empfangenen Zeilendaten enthaltend.

31. Vorrichtung nach Anspruch 26, ferner Punktanzahldatenempfangsmittel zum Empfangen von die ganze Zahl J angebenden Punktanzahldaten enthaltend.

32. Vorrichtung nach Anspruch 23, bei der das Druckmedium ein Endlosformular ist und so eingelegt ist, dass seine Längsrichtung mit der Richtung entlang der X-Achse zusammenfällt

33. Bildrucksystem, aufweisend:
eine Bilddruckvorrichtung gemäß Anspruch 23,
Druckbilddaten bildende Mittel zum Bilden der Druckbilddaten; und
Druckbilddatenübertragungsmittel zum sequentiellen Übertragen der K Zeilendatengruppen der gebildeten Druckbilddaten über eine erste Schnittstelle,
wobei die Zeilendatenempfangsmittel die K Zeilendatengruppen über die erste Schnittstelle empfangen.

34. System nach Anspruch 33, bei dem bei dem die erste Schnittstelle die Kommunikation gemäß einer Schnittstellennorm von RS-232C, USB oder IEEE1394 ermöglicht.

35. System nach Anspruch 33, bei dem die erste Schnittstelle die Kommunikation gemäß der Centronics-Norm ermöglicht.

36. System nach Anspruch 33, bei dem die Druckbilddatenübertragungsmittel aufweisen:
Druckbilddatenübertragungsmittel zum Übertragen der Druckbilddaten über eine zweite Schnittstelle;
Datenteilungsmittel zum Empfangen der Druckbilddaten über die zweite Schnittstelle und Teilen der Druckbilddaten in die K Zeilendatengruppen; und
Zeilendatenübertragungsmittel zum 'sequentiellen Übertragen der geteilten K Zeilendatengruppen nacheinander über die erste Schnittstelle.

37. System nach Anspruch 36, bei dem die zweite Schnittstelle die Kommunikation über ein vorgegebenes Netz ermöglicht.

38. System nach Anspruch 37, bei dem das vorgegebene Netz das Internet einschließt.

39. System nach Anspruch 37, bei dem das vorgegebene Netz ein vorgegebenes lokales Netz einschließt.

40. System nach Anspruch 36, bei dem die zweite Schnittstelle die Kommunikation gemäß einem LAN-basierten IEEE-Norm-Kommunikationsprotokoll ermöglicht.

41. System nach Anspruch 36, bei dem die zweite Schnittstelle die Kommunikation gemäß mindestens einem der Datenübertragungsprotokolle von Ethernet, FDDI und ATM ermöglicht.

42. Anwendung der Bilddruckvorrichtung gemäß Anspruch 23 zum Erzeugen einer Mehrzahl Etiketten, von denen ein jedes das darauf aufgedruckte Druckbild trägt, durch Verwenden jedes der Abschnitte des Druckmediums, auf dem die N Kopien des Druckbildes aufgedruckt sind.

43. Anwendung nach Anspruch 42, bei der die Etikettenerzeugungsmittel Schneidmittel zum Abschneiden der Abschnitte des Druckmediums zur Bildung entsprechender getrennter Abschnitte enthalten.

44. Anwendung nach Anspruch 42, bei der das Druckmedium so ausgebildet ist, dass das Druckmedium an einem vorgegebenen Gegenstand mit auf der Oberfläche aufgedrucktem Druckbild durch Abziehen einer Abziehschicht auf seiner Rückseite angebracht werden kann.

## Revendications

1. Procédé d'impression de N copies d'une image à imprimer, où N est un nombre entier supérieur ou égal à 2, côte à côte sur un support d'impression dans une direction d'un axe X du support d'impression, en supposant que deux axes orthogonaux l'un à l'autre dans un système bidimensionnel de coordonnées cartésiennes soient définis comme l'axe X et un axe Y, l'image à imprimer étant formée de J points dans la direction de l'axe X sur K points dans une direction de l'axe Y, où J est un nombre entier supérieur ou égal à 2 et K est un nombre entier supérieur ou égal à 2,
le procédé comprenant les étapes consistant à :
a) recevoir un k^{ième} élément de donnée de ligne des données d'image à imprimer représentant la k^{ième} ligne des J points disposés dans la direction de l'axe X de l'image à imprimer, en fonction d'un protocole prédéterminé de communication provenant d'un autre bout prédéterminé de communication, où k est un nombre entier arbitraire défini comme 1 ≤ k ≤ K ;
b) régler le k^{ième} élément de donnée de ligne des K éléments de donnée de ligne sur un k^{ième} élément de donnée de ligne courte, puis disposer successivement N copies du k^{ième} élément de donnée de ligne courte côte à côte pour former un k^{ième} élément de donnée de ligne longue représentant une ligne des N occurrences des J points formée en disposant N lignes de J points dans la direction de l'axe X ; et
c) imprimer la ligne des N occurrences des J points représentée par le k^{ième} élément de donnée de ligne longue, comme une k^{ième} ligne sur le support d'impression dans sa direction de l'axe X tout en répétant simultanément les étapes a) à c) pour recevoir ainsi successivement K éléments de donnée de ligne correspondant aux K lignes dans la direction de l'axe Y.

2. Procédé selon la revendication 1, comprenant en outre l'étape consistant à spécifier le nombre entier N qui est un nombre de copies de l'image à imprimer.

3. Procédé selon la revendication 1, comprenant en outre l'étape consistant à recevoir des données de nombre d'impressions représentatives du nombre entier N qui est un nombre de copies de l'image à imprimer.

4. Procédé selon la revendication 1, dans lequel un nombre M prédéterminé de points imprimables qui est un nombre de points imprimables dans la direction de l'axe X est déterminé sur la base du k^{ième} élément de donnée de ligne longue,
le procédé comprenant en outre l'étape consistant à déterminer le nombre entier N qui est un nombre de copies de l'image à imprimer sur la base du nombre entier J qui est un nombre de points de l'image à imprimer dans la direction de l'axe X et du nombre M prédéterminé de points imprimables.

5. Procédé selon la revendication 1, dans lequel une longueur L imprimable prédéterminé au sein de laquelle l'impression peut être exécutée dans la direction de l'axe X est déterminée sur la base du k^{ième} élément de donnée de ligne longue,
le procédé comprenant l'étape consistant à déterminer le nombre entier N qui est un nombre de copies de l'image à imprimer sur la base du nombre entier J qui est un nombre de points de l'image à imprimer dans la direction de l'axe X, une densité d'impression et la longueur L imprimable prédéterminée.

6. Procédé selon la revendication 5, comprenant en outre l'étape consistant à spécifier la densité d'impression.

7. Procédé selon la revendication 5, comprenant en outre l'étape consistant à recevoir les données de densité d'impression représentatives de la densité d'impression.

8. Procédé selon la revendication 4, comprenant en outre l'étape consistant à détecter le nombre entier J sur la base des données de ligne reçues.

9. Procédé selon la revendication 4, comprenant en outre l'étape consistant à recevoir les données de nombre points représentatives du nombre entier J.

10. Procédé selon la revendication 1, dans lequel le support d'impression a une forme continue et est monté de telle façon qu'une direction de sa longueur coïncide avec la direction de l'axe X.

11. Procédé selon la revendication 1, comprenant en outre les étapes consistant à :
former les données d'image à imprimer ; et
transmettre successivement les K éléments de donnée de ligne des données formées d'image à imprimer par l'intermédiaire d'une première interface,
dans lequel l'étape consistant à recevoir successivement les K éléments de donnée de ligne correspondant aux K lignes dans la direction de l'axe Y comprend la réception des K éléments de donnée de ligne par l'intermédiaire de la première interface.

12. Procédé selon la revendication 11, dans lequel la première interface permet une communication conforme à une norme d'interface RS-232C, USB ou IEEE1394.

13. Procédé selon la revendication 11, dans lequel la première interface permet une communication conforme à la norme Centronics.

14. Procédé selon la revendication 11, dans lequel l'étape consistant à transmettre successivement les K éléments de donnée de ligne par l'intermédiaire de la première interface comprend les étapes consistant à :
transmettre les données d'image à imprimer par l'intermédiaire d'une deuxième interface ;
recevoir les données d'image à imprimer par l'intermédiaire de la deuxième interface et diviser les données d'image à imprimer en K éléments de donnée de ligne ; et
transmettre successivement les K éléments de donnée de ligne divisés un par un par l'intermédiaire de la première interface.

15. Procédé selon la revendication 14, dans lequel la deuxième interface permet une communication par l'intermédiaire d'un réseau prédéterminé.

16. Procédé selon la revendication 15, dans lequel le réseau prédéterminé inclut Internet.

17. Procédé selon la revendication 15, dans lequel le réseau prédéterminé inclut un réseau local prédéterminé.

18. Procédé selon la revendication 14, dans lequel la deuxième interface permet une communication conformément à un protocole de communication sur réseau local selon la norme IEEE.

19. Procédé selon la revendication 14, dans lequel la deuxième interface permet une communication conformément à au moins l'un des protocoles de liaison de données suivants, à savoir Ethernet, FDDI et ATM.

20. Utilisation du procédé de la revendication 1 pour produire une pluralité d'étiquettes sur chacune desquelles l'image à imprimer est imprimée en utilisant chacune des portions du support d'impression sur lesquelles les N copies de l'image à imprimer sont respectivement imprimées.

21. Utilisation selon la revendication 20, comprenant l'étape consistant à découper les portions du support d'impression en portions individuelles respectives.

22. Utilisation selon la revendication 20, dans laquelle le support d'impression est formé de telle façon qu'il puisse être fixé sur un article objet prédéterminé, alors que l'image à imprimer est imprimée sur une surface de ce support d'impression, en pelant une couche pelliculable sur son côté opposé.

23. Dispositif d'impression d'image pour imprimer N copies d'une image à imprimer, où N est un nombre entier supérieur ou égal à 2, côte à côte sur un support d'impression dans une direction d'un axe X du support d'impression, en supposant que deux axes orthogonaux l'un à l'autre dans un système bidimensionnel de coordonnées cartésiennes soient définis comme l'axe X et un axe Y, l'image à imprimer étant formée de J points dans la direction de l'axe X sur K points dans une direction de l'axe Y, où J est un nombre entier supérieur ou égal à 2 et K est un nombre entier supérieur ou égal à 2,
le dispositif d'impression d'image comprenant :
un moyen de réception de données de ligne pour recevoir un k^{ième} élément de donnée de ligne des données d'image à imprimer représentant la k^{ième} ligne des J points disposés dans la direction de l'axe X de l'image à imprimer, en fonction d'un protocole prédéterminé de communication provenant d'un autre bout prédéterminé de communication, où k est un nombre entier arbitraire défini comme 1 ≤ k ≤ K ;
un moyen de formation de donnée de ligne longue pour régler le k^{ième} élément de donnée de ligne des K éléments de donnée de ligne sur un k^{iéme} élément de donnée de ligne courte quand le k^{iéme} élément de donnée de ligne est reçu, puis disposer successivement N copies du k^{ième} élément de donnée de ligne courte côte à côte pour former un k^{ième} élément de donnée de ligne longue représentant une ligne des N occurrences des J points formée en disposant N lignes de J points dans la direction de l'axe X ; et
un moyen d'impression de ligne pour imprimer la ligne des N occurrences des J points représentée par le k^{ième} élément de donnée de ligne longue, comme une k^{ième} ligne sur le support d'impression dans sa direction de l'axe X,
le moyen de réception de données de ligne et le moyen d'impression de ligne étant adaptés pour fonctionner en parallèle de sorte que le moyen d'impression de ligne imprime la k^{ième} ligne pendant que le moyen de réception de données de ligne reçoit les données correspondant à une ligne suivante.

24. Dispositif selon la revendication 23, comprenant en outre un moyen de spécification d'un nombre d'impressions pour spécifier le nombre entier N qui est un nombre de copies de l'image à imprimer.

25. Dispositif selon la revendication 23, comprenant en outre un moyen de réception de données de nombre d'impressions pour recevoir des données de nombre d'impressions représentatives du nombre entier N qui est un nombre de copies de l'image à imprimer.

26. Dispositif selon la revendication 23, dans lequel un nombre M prédéterminé de points imprimables qui est un nombre de points imprimables dans la direction de l'axe X est déterminé sur la base du k^{ième} élément de donnée de ligne longue,
le dispositif comprenant en outre un moyen à déterminer le nombre entier N qui est un nombre de copies de l'image à imprimer sur la base du nombre entier J qui est un nombre de points de l'image à imprimer dans la direction de l'axe X et du nombre M prédéterminé de points imprimables.

27. Dispositif selon la revendication 23, dans lequel une longueur L imprimable prédéterminée au sein de laquelle l'impression peut être exécutée dans la direction de l'axe X est déterminée sur la base du k^{ième} élément de donnée de ligne longue,
le dispositif d'impression d'image comprenant en outre un moyen de détermination d'un nombre d'impressions pour déterminer le nombre entier N qui est un nombre de copies de l'image à imprimer sur la base du nombre entier J qui est un nombre de points de l'image à imprimer dans la direction de l'axe X, une densité d'impression et la longueur L imprimable prédéterminée.

28. Dispositif selon la revendication 27, comprenant en outre un moyen de spécification de densité d'impression pour spécifier la densité d'impression.

29. Dispositif selon la revendication 27, comprenant en outre un moyen de réception de données de densité d'impression pour recevoir les données de densité d'impression représentatives de la densité d'impression.

30. Dispositif selon la revendication 26, comprenant en outre un moyen de détection de nombre de points pour détecter le nombre entier J sur la base des données de ligne reçues.

31. Dispositif selon la revendication 26, comprenant en outre un moyen de réception de données de nombre de points pour recevoir les données de nombre points représentatives du nombre entier J.

32. Dispositif selon la revendication 23, dans lequel le support d'impression a une forme continue et est monté de telle façon qu'une direction de sa longueur coïncide avec la direction de l'axe X.

33. Système d'impression d'image comprenant :
un dispositif d'impression d'image selon la revendication 23,
un moyen de formation d'image à imprimer pour former les données d'image à imprimer ; et
un moyen de transmission de données d'image à imprimer pour transmettre successivement les K éléments de donnée de ligne des données formées d'image à imprimer par l'intermédiaire d'une première interface,
dans lequel le moyen de réception de données de ligne reçoit les K éléments de donnée de ligne par l'intermédiaire de la première interface.

34. Système selon la revendication 33, dans lequel la première interface permet une communication conforme à une norme d'interface RS-232C, USB ou IEEE1394.

35. Système selon la revendication 33, dans lequel la première interface permet une communication conforme à la norme Centronics.

36. Système selon la revendication 33, dans lequel le moyen de transmission de données d'image à imprimer comprend :
un moyen de transmission de données d'image pour transmettre les données d'image à imprimer par l'intermédiaire d'une deuxième interface ;
un moyen de division des données pour recevoir les données d'image à imprimer par l'intermédiaire de la deuxième interface et diviser les données d'image à imprimer en K éléments de donnée de ligne ; et
un moyen de transmission de données de ligne pour transmettre successivement les K éléments de donnée de ligne divisés un par un par l'intermédiaire de la première interface.

37. Système selon la revendication 36, dans lequel la deuxième interface permet une communication par l'intermédiaire d'un réseau prédéterminé.

38. Système selon la revendication 37, dans lequel le réseau prédéterminé inclut Internet.

39. Système selon la revendication 37, dans lequel le réseau prédéterminé inclut un réseau local prédéterminé.

40. Système selon la revendication 36, dans lequel la deuxième interface permet une communication conformément à un protocole de communication sur réseau local selon la norme IEEE.

41. Système selon la revendication 36, dans lequel la deuxième interface permet une communication conformément à au moins l'un des protocoles de liaison de données suivants, à savoir Ethernet, FDDI et ATM.

42. Utilisation du dispositif d'impression d'image selon la revendication 23 pour produire une pluralité d'étiquettes sur chacune desquelles l'image à imprimer est imprimée en utilisant chacune des portions du support d'impression sur lesquelles les N copies de l'image à imprimer sont respectivement imprimées.

43. Utilisation selon la revendication 42, dans laquelle le moyen de production d'étiquettes comprend un moyen pour découper les portions du support d'impression en portions individuelles respectives.

44. Utilisation selon la revendication 42, dans laquelle le support d'impression est formé de telle façon qu'il puisse être fixé sur un article objet prédéterminé, alors que l'image à imprimer est imprimée sur une surface de ce support d'impression, en pelant une couche pelliculable sur son côté opposé.
